(19) Europäisches Patentamt
European Patent Office
Office européen des brevets

(11) **EP 4 697 224 A1**

(12) **EUROPEAN PATENT APPLICATION**
published in accordance with Art. 153(4) EPC

(43) Date of publication:
**18.02.2026  Bulletin 2026/08**

(21) Application number: 23932847.9

(22) Date of filing: **20.12.2023**

(51) International Patent Classification (IPC):
*G06F 30/15* (2020.01)

(52) Cooperative Patent Classification (CPC):
**G06F 3/00; G06F 16/2458; G06F 30/12;
G06F 30/15; G06F 30/27; G06F 30/367;
G06N 3/098;** G06F 2111/02

(86) International application number:
**PCT/CN2023/140138**

(87) International publication number:
**WO 2024/212576 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **14.04.2023  CN 202310420252**

(71) Applicant: **Shenzhen Yinwang Intelligent
Technologies Co., Ltd.
Shenzhen, Guangdong 518110 (CN)**

(72) Inventors:
• **YUAN, Zhaorong
Shenzhen, Guangdong 518129 (CN)**
• **TONG, Xu
Shenzhen, Guangdong 518129 (CN)**
• **GUAN, Gaoyang
Shenzhen, Guangdong 518129 (CN)**

(74) Representative: **Gill Jennings & Every LLP
The Broadgate Tower
20 Primrose Street
London EC2A 2ES (GB)**

(54) **PORT WIRING ASSISTING METHOD, AND MODEL TRAINING METHOD AND APPARATUS**

(57)    This application discloses a port connection assistance method, a model training method, and an apparatus. The method includes: When receiving a connection instruction for a first port, a first development platform determines a currently idle port as a second port, and obtains port information of the first port and port information of the second port for input into a federated learning model, where there is one or more second ports. The federated learning model may output a port confidence of port information of each second port relative to that of the first port, select n ports with highest port confidences for presentation to a user in a display list in a development interface, and present a connection line between a third port with a highest port confidence and the first port in the development interface. Because the port confidence is a correlation degree between the port information of the second port and the port information of the first port, accuracy of an auxiliary connection line and connection efficiency can be improved by selecting the third port as a connection port.

A first development platform receives a connection instruction — 201

The first development platform obtains port information of a first port and port information of a second port based on the connection instruction — 202

The first development platform inputs the port information of the first port and the port information of the second port into a federated learning model, to obtain a port confidence of the second port relative to the first port — 203

The first development platform presents a recommended port in a display list in a development interface — 204

The first development platform presents an auxiliary connection line in the development interface — 205

FIG. 2

## Description

This application claims priority to Chinese Patent Application No. 202310420252.9, filed with the China National Intellectual Property Administration on April 14, 2023 and entitled "PORT CONNECTION ASSISTANCE METHOD, MODEL TRAINING METHOD, AND APPARATUS", which is incorporated herein by reference in its entirety.

## TECHNICAL FIELD

Embodiments of this application relate to the field of vehicles, and in particular, to a port connection assistance method, a model training method, and an apparatus.

## BACKGROUND

Development of conventional embedded software includes two phases: First, a functional algorithm of the software is designed, and the algorithm is implemented by using a specific programming language. Then, the software can be deployed on a hardware device for testing. It is a lengthy and extremely labor-intensive process to update the functional algorithm, modify code, and deploy a program for retesting. To complete this process in a short period of time, the idea of model-based design (model-based design, MBD) and development has made significant progress in recent years. Various software tools developed based on models are continuously emerging, covering aspects such as model design, simulation, analysis, and verification. Model-driven development tools allow engineers to perform model-based design and development on visual interactive platforms by using intuitive component diagrams. During model-driven development, based on basic components with different functions provided by the model-driven development tools, users add the basic components to a development interface, and connect input and output ports of the components to establish port connection lines for indication of a data flow relationship or a control flow relationship between the components. In a connection process, a cursor is dragged from an output port of a component to an input port of another component or a shortcut key is used for connection, so that connection lines are established one by one. In a complex model, there are hundreds of to-be-connected ports. This brings difficulties for the users in finding target ports and performing connection operations, resulting in a cumbersome and inefficient conventional connection process. Therefore, there is a need to optimize a connection manner and process during modeling.

Currently, a solution is provided to automatically complete connection operations by selecting components in which ports are located. However, in the solution, connection can only be performed on 1st ports of two components. When there are a large quantity of ports on the components or to-be-connected ports are not the 1st ports, connection lines cannot be correctly established in this manner. In this case, error correction is required, which affects connection efficiency.

## SUMMARY

This application provides a port connection assistance method, a model training method, and an apparatus, to improve accuracy of an auxiliary connection line and connection efficiency.

A first aspect of this application provides a port connection assistance method. The method includes: receiving a connection instruction, where the connection instruction indicates to perform connection to a first port; obtaining port information of the first port and port information of a second port based on the connection instruction, where the second port is one or more currently idle ports; inputting the port information of the first port and the port information of the second port into a federated learning model, to obtain a port confidence of the second port relative to the first port, where the port confidence is a correlation degree of port information; presenting a recommended port in a display list in a development interface, where the recommended port is n ports with highest port confidences in the second port, and $n \geq 1$; and presenting an auxiliary connection line in the development interface, where the auxiliary connection line is a connection line between the first port and a third port, and the third port is a port with a highest port confidence in the recommended port.

In the foregoing aspect, when receiving the connection instruction for the first port, a first development platform determines a currently idle port as the second port, and obtains the port information of the first port and the port information of the second port for input into the federated learning model, where there is one or more second ports. The federated learning model may output the port confidence of the port information of each second port relative to that of the first port, select n ports with the highest port confidences for presentation to a user in the display list in the development interface, and present the connection line between the third port with a highest port confidence and the first port in the development interface. Because the port confidence is the correlation degree between the port information of the second port and the port information of the first port, accuracy of the auxiliary connection line and connection efficiency can be improved by selecting the third port as a connection port.

In a possible implementation, after presenting the auxiliary connection line in the development interface, the method further includes: receiving a switching instruction of a user, where the switching instruction indicates to switch to a fourth port, and the fourth port is a port in the display list; and changing the auxiliary connection line to a connection line between the first port and the fourth port.

In the foregoing possible implementation, the third port may not be a port to which the user wants to perform connection, but another port with a high port confidence in the display list. In this case, the user may send the switching instruction to the first development platform to indicate to switch to the fourth port. After receiving the switching instruction, the first development platform may cancel the connection line between the first port and the third port, and change the auxiliary connection line to the connection line between the first port and the fourth port. This improves flexibility of the solution.

In a possible implementation, before receiving the switching instruction of the user, the method further includes: receiving a port name input by the user; and presenting a port related to the port name in the display list.

In the foregoing possible implementation, none of the ports in the display list may be a port to which the user wants to perform connection. In this case, the user may directly input a port name of the port to which the user wants to perform connection. The first development platform changes the port in the display list to a port corresponding to the port name input by the user, and correspondingly presents, in the development interface, an auxiliary connection line between the port corresponding to the port name and the first port. The port name input by the user is not necessarily a completed name. In this case, the first development platform may automatically match, based on the name input by the user, the port related to the input name to present in the display list, and the user selects one of the ports as a port for establishing an auxiliary connection line with the first port, and delivers the switching instruction to the first development platform. This improves flexibility of the solution.

In a possible implementation, after presenting the connection line between the first port and the port with the highest port confidence in the recommended port, the method further includes: receiving a confirmation instruction of the user; and performing connection according to the auxiliary connection line based on the confirmation instruction.

In the foregoing possible implementation, the auxiliary connection line is merely a previewed connection line used as an example, and is not an actual connection line between the two ports. The auxiliary connection line is materialized only after confirmation by the user. To be specific, after receiving the confirmation instruction of the user, the first development platform connects the two ports in a connection manner of the auxiliary connection line. This improves accuracy of an actual connection line.

In a possible implementation, the port information includes a plurality of the following: a port name, a port type, a type of data transmitted by a port, a component type, a component category, a position of the port in an interface, and a name of a component in which the port is located.

In a possible implementation, inputting the port information of the first port and the port information of the second port into the federated learning model includes: filtering the second port based on the port type, the type of data, and the component category of the first port, to obtain a fifth port; and inputting the port information of the first port and port information of the fifth port into the federated learning model.

In the foregoing possible implementation, before inputting the port information of the first port and the port information of the second port into the federated learning model, the first development platform may further filter the second port. To be specific, a port that is in the second port and whose port information does not meet the port type, the type of data, and the category of the component of the first port is filtered, and a remaining second port is the fifth port. The first development platform may input the port information of the first port and the port information of the fifth port into the federated learning model, without a need to calculate port data of all second ports. This reduces a calculation amount.

In a possible implementation, the federated learning model includes a weight of the port name, a weight of the component type, a weight of the position of the port in the interface, and a weight of the name of the component in which the port is located.

In a possible implementation, the method further includes: obtaining port information of a sixth port and port information of a first connection port, where the sixth port is one or more currently idle ports, and the first connection port is a to-be-connected port determined by the user; sending the port information of the sixth port and the port information of the first connection port to a federated learning server; receiving a training model from the federated learning server, where the training model is obtained by the federated learning server through training based on the port information of the sixth port and the port information of the first connection port; and updating the federated learning model based on the training model.

In the foregoing possible implementation, for the federated learning model used to calculate a port confidence, with consent of the user, the federated learning server may collect connection information of the user during model-driven development, generate a local dataset, and optimize a confidence calculation model according to a federated learning method, so that a recommendation result is more accurate. The federated learning server may obtain, from the first development platform, a current idle port in the development interface of the first development platform as the sixth port. There may be one or more idle ports in the development interface. The federated learning server may train the local federated learning model in time based on the port information of the sixth port and the port information of the first connection port to obtain a trained training model, and send the trained training model to the first development platform, to update the local federated learning model of the first development platform and improve accuracy of the port confidence.

A second aspect of this application provides a model training method. The method includes: receiving port information of a sixth port and port information of a first connection port from a first development platform, where the sixth port is one or more currently idle ports, and the first connection port is a to-be-connected port determined by a user; training the port information of the sixth port and the port information of the first connection port, to obtain a training model; and sending the training model to the first development platform.

In the foregoing aspect, for the federated learning model used to calculate a port confidence, with consent of the user, a federated learning server may collect connection information of the user during model-driven development, generate a local dataset, and optimize a confidence calculation model according to a federated learning method, so that a recommendation result is more accurate. The federated learning server may obtain, from the first development platform, a current idle port in the development interface of the first development platform as the sixth port. There may be one or more idle ports in the development interface. The federated learning server may train the local federated learning model in time based on the port information of the sixth port and the port information of the first connection port to obtain a trained training model, and send the trained training model to the first development platform, to update the local federated learning model of the first development platform and improve accuracy of the port confidence.

In a possible implementation, the method further includes: receiving port information of a seventh port and port information of a second connection port from a second development platform, where the seventh port is one or more currently idle ports, and the second connection port is a to-be-connected port determined by the user; and performing training based on the port information of the seventh port and the port information of the second connection port, to adjust the training model.

In the foregoing possible implementation, based on a feature of the federated learning server, the federated learning server may further receive a current idle port in a development interface of the second development platform obtained by another development platform (for example, the second development platform) as the seventh port. There may be one or more idle ports in the development interface. The federated learning server may train the local federated learning model in time based on the port information of the sixth port and the port information of the first connection port to obtain the trained training model, and send the trained training model to the first development platform, to update the local federated learning model of the first development platform. Alternatively, if data uploaded by the second development platform is uploaded simultaneously with or after data uploaded by the first development platform, the trained training model sent to the first development platform may be adjusted by training the data uploaded by the second development platform, to improve calculation precision of the port confidence.

A third aspect of this application provides a port connection assistance apparatus. The apparatus may implement the method according to the first aspect or any one of the possible implementations of the first aspect. The apparatus includes a corresponding unit or module configured to perform the method. The unit or module included in the apparatus may be implemented by software and/or hardware. For example, the apparatus may be a network device, or may be a chip, a chip system, a processor, or the like that supports the network device to implement the foregoing method, or may be a logic module or software that can implement all or some functions of the network device.

A fourth aspect of this application provides a model training apparatus. The apparatus may implement the method according to the second aspect or any one of the possible implementations of the second aspect. The apparatus includes a corresponding unit or module configured to perform the method. The unit or module included in the apparatus may be implemented by software and/or hardware. For example, the apparatus may be a network device, or may be a chip, a chip system, a processor, or the like that supports the network device to implement the foregoing method, or may be a logic module or software that can implement all or some functions of the network device.

A fifth aspect of this application provides a computer device, including a processor. The processor is coupled to a memory, and the memory is configured to store instructions. When the instructions are executed by the processor, the computer device is enabled to implement the method according to the first aspect or any one of the possible implementations of the first aspect. For example, the computer device may be a network device, or may be a chip, a chip system, or the like that supports the network device to implement the foregoing method.

A sixth aspect of this application provides a computer device, including a processor. The processor is coupled to a memory, and the memory is configured to store instructions. When the instructions are executed by the processor, the computer device is enabled to implement the method according to the second aspect or any one of the possible implementations of the second aspect. For example, the computer device may be a network device, or may be a chip, a chip system, or the like that supports the network device to implement the foregoing method.

A seventh aspect of this application provides a computer-readable storage medium. The computer-readable storage medium stores instructions. When the instructions are executed by a processor, the method provided in the first aspect or any one of the possible implementations of the first aspect and the method provided in the second aspect or any one of the possible implementations of the second aspect are implemented.

An eighth aspect of this application provides a computer program product. The computer program product includes computer program code. When the computer program code is executed on a computer, the method provided in the first aspect or any one of the possible implementations of the first aspect and the method provided in the second aspect or any one of the possible implementations of the second aspect are implemented.

## BRIEF DESCRIPTION OF DRAWINGS

FIG. 1 is a diagram of an architecture of model-driven development according to an embodiment of this application;
FIG. 2 is a schematic flowchart of a port connection assistance method according to an embodiment of this application;
FIG. 3 is a diagram of a distance between ports and a diagonal according to an embodiment of this application;
FIG. 4 is a diagram of a display list and an auxiliary connection line according to an embodiment of this application;
FIG. 5 is a diagram of another display list and another auxiliary connection line according to an embodiment of this application;
FIG. 6 is a schematic flowchart in which a first development platform completes connection assistance according to an embodiment of this application;
FIG. 7 is a diagram in which a first development platform performs connection assistance according to an embodiment of this application;
FIG. 8 is a schematic flowchart of training a federated learning model by a federated learning server according to an embodiment of this application;
FIG. 9 is a diagram of a structure of a connection assistance system according to an embodiment of this application;
FIG. 10 is a diagram of a structure of a port connection assistance apparatus according to an embodiment of this application;
FIG. 11 is a diagram of a structure of a model training apparatus according to an embodiment of this application;
FIG. 12 is a diagram of a structure of a computer device according to an embodiment of this application; and
FIG. 13 is a diagram of a structure of another computer device according to an embodiment of this application.

## DESCRIPTION OF EMBODIMENTS

This application provides a port connection assistance method, a model training method, and an apparatus, to improve accuracy of an auxiliary connection line and connection efficiency.

The following describes embodiments of this application with reference to the accompanying drawings. It is clear that the described embodiments are merely some rather than all of embodiments of this application. A person of ordinary skill in the art may learn that, with development of technologies and emergence of a new scenario, technical solutions provided in embodiments of this application are also applicable to a similar technical problem.

In the specification, claims, and the accompanying drawings of this application, the terms "first", "second", and the like are intended to distinguish similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The specific term "example" herein means "being used as an example, embodiment, or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

First, some technical terms in embodiments of this application are described.

Embedded system: An embedded system usually includes four parts: an embedded microprocessor, a peripheral hardware device, an embedded operating system, and an application of a user, and is used to control, monitor, or manage another device.

Embedded software: Embedded software is designed based on the embedded system, and is a type of computer software. The embedded software includes programs and documents, and is an important part of the embedded system.

Model-based development: A software design method based on a model, which enables developers to develop more quickly and at lower costs than a conventional software development process. An application scope includes signal processing, a control system, and the communication industry. The model is the center of the entire development process, spanning requirements, design, implementation, and testing. Model-based development is widely applied in the fields of aerospace and automobiles.

Model-driven development: Another way to express model-based development.

Model-driven development tool: A model-based software development platform.

What You See Is What You Get: In embodiments of this application, "What You See Is What You Get" means that configuration and generation of code generation are combined, configuration is directly performed based on generated target language code, and the code is refreshed in real time after the configuration.

Confidence: Confidence, also referred to as reliability, confidence level, or confidence coefficient, implies that conclusions of population parameter estimation through sampling are uncertain due to randomness of samples. For this reason, a probability statement method, that is, an interval estimation method in mathematical statistics, is used. This method determines a probability that an estimated value is within a specific acceptable error range relative to the population parameter. The corresponding probability is referred to as confidence.

Weight: Weight is a relative concept and is specific to a specific indicator. A weight of an indicator is relative importance of the indicator in overall evaluation.

Federated learning (federated learning, FL): FL is a distributed machine learning algorithm that enables collaborative model training and algorithm update by using a plurality of servers and clients, such as mobile devices or edge servers, while keeping data local, to obtain a trained global model. It may be understood that, in a machine learning process, participants may perform joint modeling by using data of another party. All parties do not need to share data resources. That is, data joint training is performed to establish a shared machine learning model when data remains local.

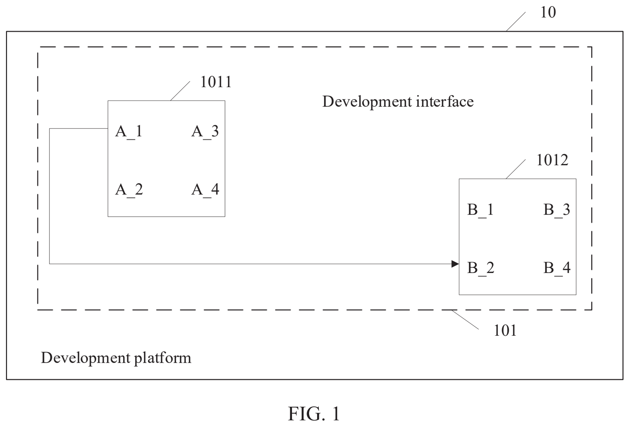

Development of conventional embedded software includes two phases: First, a functional algorithm of the software is designed, and the algorithm is implemented by using a specific programming language. Then, the software can be deployed on a hardware device for testing. It is a lengthy and extremely labor-intensive process to update the functional algorithm, modify code, and deploy a program for retesting. To complete this process in a short period of time, the idea of model-based design (model-based design, MBD) and development has made significant progress in recent years. Various software tools developed based on models are continuously emerging, covering aspects such as model design, simulation, analysis, and verification. Model-driven development tools allow engineers to perform model-based design and development on visual interactive platforms by using intuitive component diagrams. FIG. 1 is a diagram of an architecture of model-driven development according to an embodiment of this application. The architecture includes a development platform 10. The development platform 10 is a model-driven development tool, and may present a development process in a development interface 101. For example, a component A1011 and a component B1012 may be added to the development interface 101. A quantity of connection ports of the component A1011 and the component B1012 is not limited. In FIG. 1, for example, ports of the component A1011 include A_1, A_2, A_3, and A_4, and ports of the component B1012 include B_1, B_2, B_3, and B_4. Input and output ports of components are connected to establish a port connection line for indication of a data flow relationship or a control flow relationship between the components. In a connection process, a cursor is dragged from an output port of a component to an input port of another module or a shortcut key is used for connection, so that connection lines are established one by one. As shown in FIG. 1, a connection line may be established by dragging a cursor from the output port A_1 to the input port B_2, indicating that data of the component A1011 flows to the component B1012.

In a complex model, there are hundreds of to-be-connected ports. This brings difficulties for the users in finding target ports and performing connection operations, resulting in a cumbersome and inefficient conventional connection process. Therefore, there is a need to optimize a connection manner and process during modeling.

Currently, a solution is provided to automatically complete connection operations by selecting components in which ports are located. However, in the solution, connection can only be performed on 1st ports of two components. When there are a large quantity of ports on the components or to-be-connected ports are not the 1st ports, connection lines cannot be correctly established in this manner. In this case, error correction is required, which affects connection efficiency.

To resolve the foregoing problem, embodiments of this application provide a port connection assistance method. The method is described as follows.

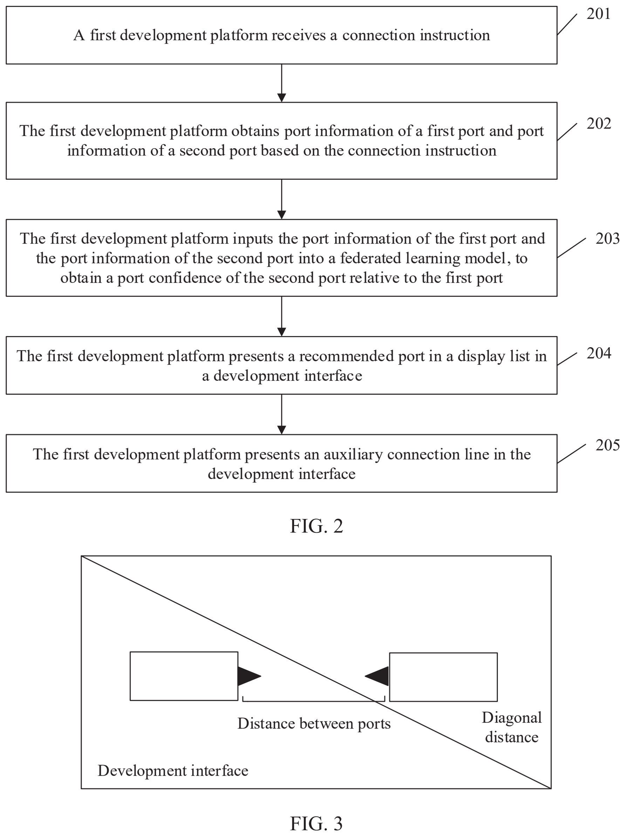

FIG. 2 is a schematic flowchart of a port connection assistance method according to an embodiment of this application. The method includes the following steps.

Step 201: A first development platform receives a connection instruction, where the connection instruction indicates to perform connection to a first port.

In this embodiment, when a user needs to perform connection to the first port, the user may notify the first development platform through the connection instruction. The connection instruction may be generated by the user by clicking or double-clicking the first port with a cursor, or may be generated by the user by inputting a name of the first port. This is not limited herein.

Step 202: The first development platform obtains port information of the first port and port information of a second port based on the connection instruction, where the second port is one or more currently idle ports.

In this embodiment, when determining, based on the connection instruction, that connection needs to be performed on the first port, the first development platform may determine connectable ports in a current development interface, that is, idle ports of all components, use the idle ports as the second port, and then collect the port information of the first port and the port information of the second port.

Step 203: The first development platform inputs the port information of the first port and the port information of the second port into a federated learning model, to obtain a port confidence of the second port relative to the first port, where the port confidence is a correlation degree of port information.

In this embodiment, after obtaining the port information of the first port and the port information of the second port, the first development platform may obtain through matching a correlation degree between the port information of the first port and the port information of the second port. To be specific, the port information of the first port and the port information of the second port are input into the federated learning model, and the federated learning model may output a port confidence indicating the correlation degree, that is, a matching degree between the port information of the second port and the port information of the first port. The federated learning model may be used to train the model by using multi-party data while protecting data privacy, so that accuracy of the port confidence can be improved.

In an example, the port information may include a plurality of the following: a port name, a port type, a type of data transmitted by a port, a component type, a component category, a position of the port in an interface, and a name of a component in which the port is located. The port name indicates a position of the port in a component. The port type indicates whether the port is an output port or an input port. The type of data indicates a type of data output or input by the port. There are three types of components: source components, computing components, and aggregation components. The source component indicates that the component is used to generate a data source and has only an output port but no input port. The aggregation component indicates that the component is used to aggregate data and has only an input port but no output port. The computing component indicates that the component is used to calculate port data and then output calculated data, and has both an input port and an output port. The component category indicates a functional type of a component, such as a display component, a constant output component, a comparator, or an adder.

Two connected ports need to meet a preset condition. To be specific, one of the two ports is an input port, and the other is an output port; types of data transmitted by the two ports need to match each other, that is, the types of data transmitted by the two ports need to be completely the same or compatible, and data dimensions need to be consistent; and a preset specific constraint may be met, for example, a type-A component needs to be connected to a type-B component. In this case, before inputting the port information of the first port and the port information of the second port into the federated learning model, the first development platform may further filter the second port. To be specific, a port that is in the port information of the second port and that does not meet a port type, a type of data, and a component category of the first port is filtered out, and a remaining second port is a fifth port. The first development platform may input the port information of the first port and the port information of the fifth port into the federated learning model, without a need to calculate port data of all second ports. This reduces a calculation amount.

The federated learning model in this embodiment of this application may include weights of port information that is not related to filtering, that is, a weight 1 of the port name, a weight 2 of the component type, a weight 3 of the position of the port in the interface, and a weight 4 of the name of the component in which the port is located. In this case, in the port confidence, a proportion of a matching degree between a port name of the first port and a port name of the fifth port is the weight 1, a proportion of a matching degree between a component type of the first port and a component type of the fifth port is the weight 2, a proportion of a distance between a position of the first port in the interface and a position of the fifth port in the interface is the weight 3, and a proportion of a matching degree between a name of a component in which the first port is located and a name of a component in which the fifth port is located is the weight 4. An initial weight value of each feature is an empirical value during actual development.

Formal description of confidence calculation is as follows:

$$\text{Confidence} = \text{Feature}_{\text{distance}} \cdot \text{Weight}_{\text{distance}} + \text{Feature}_{\text{name}} \cdot \text{Weight}_{\text{name}} + \text{Feature}_{\text{dataType}}$$
$$\cdot \text{Weight}_{\text{dataType}} + \text{Feature}_{\text{componentType}} \cdot \text{Weight}_{\text{componentType}}$$

Confidence is a result of confidence calculation.

$\text{Feature}_{\text{distance}}$ is a feature value of a distance between ports. The distance between ports is calculated based on coordinates of the ports on the interface. The feature value is calculated based on a size of a modeling interface, and is obtained by dividing a length of a diagonal of a current interface by the distance between ports, as shown in the following diagram of the distance between ports and the diagonal in FIG. 3.

$\text{Weight}_{\text{distance}}$ is a feature weight of the distance with an empirical value of 0.1.

$\text{Feature}_{\text{name}}$ and $\text{Weight}_{\text{name}}$ are respectively a feature value and a feature weight of the port name. The feature value is a matching degree of a prefix or a suffix of a name character string, that is, a proportion of a length of a matching character string (a longer length in lengths of the prefix and the suffix) to a length of a source port name. An empirical value of the feature weight is 0.45.

$\text{Feature}_{\text{dataType}}$ and $\text{Weight}_{\text{dataType}}$ are respectively a feature value and a feature weight of the type of data transmitted by the port. The feature value varies based on matching degrees of the type of transmitted data. If types are the same, the feature value is 1. If the types match each other through aliasing, the feature value is 0.8. That the types match each other through aliasing indicates that actual types of ports are the same, but one or two of the types use an alias of the type. For example, two port types are i32 and int32_t respectively, but actual types corresponding to the two ports are both int32. If the types are compatible, for example, a port output is of the type int32, a connection of the port output may be of a double type, and the feature value is 0.4. If the types are incompatible, for example, the port types are int32 and String respectively, the feature value is 0. An empirical value of the feature weight of the type of data transmitted by the port is 0.4.

$\text{Feature}_{componentType}$ and $\text{Weight}_{componentType}$ are respectively a feature value and a feature weight of the component type in which the port is located. When a source component is connected to a computing component, the feature value is 0.8. When a computing component is connected to a computing component, the feature value is also 0.8. When a computing component is connected to an aggregation component, the feature value is 0.6. When a source component is connected to an aggregation component, the feature value is 0.2. An empirical value of the weight of the component type in which the port is located is 0.05.

For the federated learning model used to calculate a port confidence, with consent of the user, a federated learning server may collect connection information of the user during model-driven development, generate a local dataset, and optimize a confidence calculation model according to a federated learning method, so that a recommendation result is more accurate. The federated learning server may obtain, from the first development platform, a current idle port in the development interface of the first development platform as the sixth port. There may be one or more idle ports in the development interface. The federated learning server may train the local federated learning model in time based on port information of the sixth port and port information of the first connection port to obtain a trained training model, and send the trained training model to the first development platform, to update the local federated learning model of the first development platform.

The first connection port that is actually determined by the user for connection includes a start port and a target port. Connection that is actually determined by the user may be connection that is not determined in the solution of this application, for example, connection of connection ports performed by the user by dragging a cursor, or may be connection of ports that is determined by the user in this embodiment of this application, and the ports are not ports with a highest port confidence. This is not limited herein.

Based on a feature of the federated learning server, the federated learning server may further receive a current idle port in a development interface of the second development platform obtained by another development platform (for example, the second development platform) as the seventh port. There may be one or more idle ports in the development interface. The federated learning server may train the local federated learning model in time based on the port information of the sixth port and the port information of the first connection port to obtain the trained training model, and send the trained training model to the first development platform, to update the local federated learning model of the first development platform. Alternatively, if data uploaded by the second development platform is uploaded simultaneously with or after data uploaded by the first development platform, the trained training model sent to the first development platform may be adjusted by training the data uploaded by the second development platform, to improve calculation precision of the port confidence.

Step 204: The first development platform presents a recommended port in a display list in the development interface, where the recommended port is n ports with highest port confidences in the second port, and $n \geq 1$.

In this embodiment, after obtaining a port confidence of each second port output by the federated learning model, the first development platform may sort all port confidences. A sorting manner may be in descending order. The first development platform may determine that a correlation degree between the first port and the second port corresponding to the first n port confidences sorted is higher than that between the first port and other second ports. In other words, the n second ports are more likely to be ports to which the user wants to perform connection finally. The first development platform may present the n second ports as recommended ports in the display list in the development interface. The display list may be presented at any boundary of the development platform, or may be presented at a position of the first port. This is not limited herein.

Step 205: The first development platform presents an auxiliary connection line in the development interface, where the auxiliary connection line is a connection line between the first port and a third port, and the third port is a port with a highest port confidence in the recommended port.

In this embodiment, after determining the port confidence of each second port, the first development platform may select the port with the highest port confidence in the recommended port as the third port. The third port is most likely to be a port to which the user wants to perform connection finally. The first development platform may provide the example auxiliary connection line between the first port and the third port to the user. In other words, the first development platform automatically connects the first port to the third port, without a need for the user to manually perform connection.

In an example, based on a concept of "What You See Is What You Get", a connection line from a to-be-connected port to the target port is generated in real time based on a target selected by the user in the display list, and is displayed in the interface. When the user switches the target in the display list, the connection line is refreshed in real time. When the connection target meets an expectation, the user may confirm that the connection is established to complete connection line creation. In other words, the third port may not be a port to which the user wants to perform connection, but another port with a high port confidence in the display list. In this case, the user may send a switching instruction to the first development platform to indicate to switch to a fourth port. After receiving the switching instruction, the first development platform may cancel the connection line between the first port and the third port, and change the auxiliary connection line to the connection line between the first port and the fourth port. The switching instruction may be generated by the user by clicking or double-clicking the fourth port in the display list. This is not limited herein.

In another example, none of the ports in the display list may be a port to which the user wants to perform connection. In this case, the user may directly input a port name of the port to which the user wants to perform connection. The first development platform changes the port in the display list to a port corresponding to the port name input by the user, and correspondingly presents, in the development interface, an auxiliary connection line between the port corresponding to the port name and the first port. The port name input by the user is not necessarily a completed name. In this case, the first development platform may automatically match, based on the name input by the user, the port related to the input name to present in the display list, and the user selects one of the ports as a port for establishing an auxiliary connection line with the first port, and delivers the switching instruction to the first development platform.

In an example, the auxiliary connection line is merely a previewed connection line used as an example, and is not an actual connection line between the two ports. The auxiliary connection line is materialized only after confirmation by the user. To be specific, after receiving the confirmation instruction of the user, the first development platform connects the two ports in a connection manner of the auxiliary connection line. The confirmation instruction of the user may be generated by clicking a confirmation button.

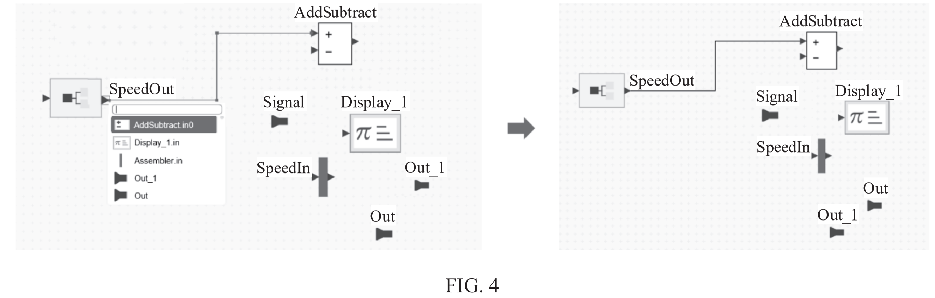

For example, for the display list and the auxiliary connection line, refer to the diagrams shown in FIG. 4. Rectangular patterns in FIG. 4 are basic components provided by a development platform, and triangles and irregular shapes are ports. The user triggers connection recommendation for the SpeedOut port on a leftmost module. As shown in the left diagram of FIG. 4, five recommended ports (AddSubtract.in0, Display_1, Assembler.in, Out_1 and Out) are displayed in a display list in a floating window. These recommended ports are sorted by port confidences. By default, an auxiliary connection line to a port (AddSubtract.in0) with a highest port confidence is previewed in the development interface. The user may switch between recommended results. For example, for AddSubtract.in0, a connection line between the SpeedOut port and the AddSubtract.in0 port is previewed. The user confirms that the connection is proper and completes the final connection, as shown in the right diagram of FIG. 4.

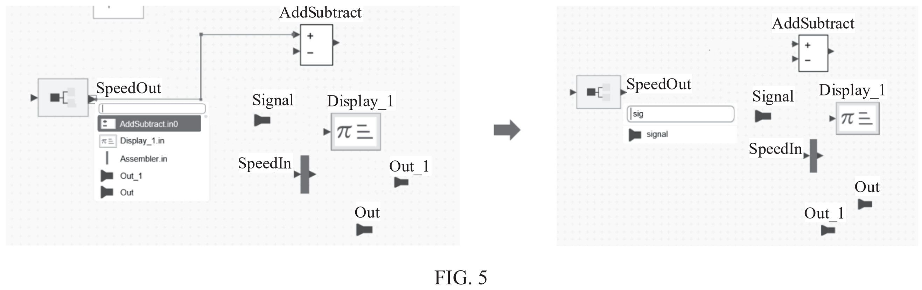

When none of the recommended ports are desired ports of the user, the user may directly input a port name. FIG. 5 is a diagram of another display list and another auxiliary connection line according to an embodiment of this application. Rectangular patterns in FIG. 5 are basic components provided by a development platform, and triangles and irregular shapes are ports. The user triggers connection recommendation for the SpeedOut port on a leftmost module. As shown in the left diagram of FIG. 5, five recommended ports (AddSubtract.in0, Display_1, Assembler.in, Out_1 and Out) are displayed in a display list in a floating window. These recommended ports are sorted by port confidences. By default, an auxiliary connection line to a port (AddSubtract.in0) with a highest port confidence is previewed in the development interface. None of the five recommended ports in the display list are ports required by the user. The user may search for a target port by name in a search box in a floating window. Refer to the right diagram of FIG. 5. The user may search for a port signal from connectable ports and presents the port in the recommendation results without inputting a complete port name, but simply sig for example. The user may select signal and confirm to complete final connection.

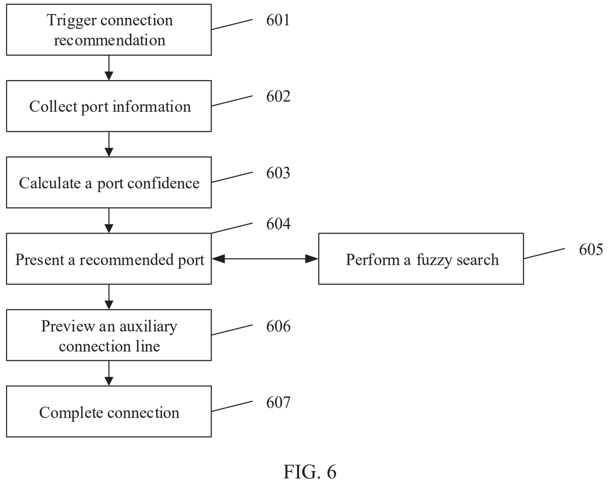

In this embodiment of this application, for a process in which a first development platform completes connection assistance, refer to FIG. 6. Step 601: The first development platform triggers connection recommendation. Step 602: The first development platform collects port information, that is, port information of a first port, and port information of a second port. Step 603: The first development platform performs port confidence calculation on the port information of the first port and the port information of the second port. Step 604: The first development platform presents a recommended port in a display list. Step 605: When the recommended port does not have a port required by a user, the first development platform may determine the required port through fuzzy search, that is, the user inputs a port name in a search box, so that a corresponding port can be presented in the display list as the recommended port. Step 606: The first development platform previews an auxiliary connection line in a development interface. Step 607: The first development platform completes connection based on a confirmation instruction of the user.

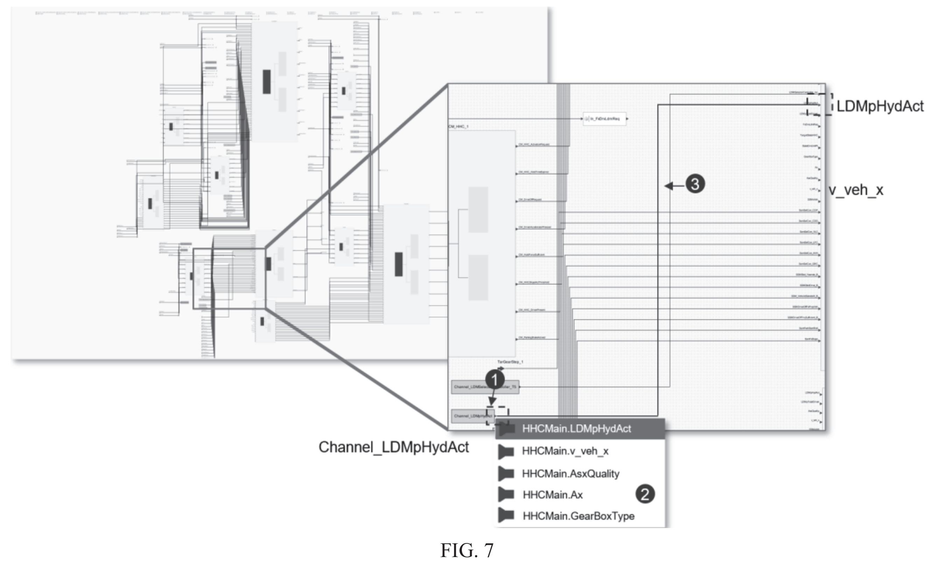

Specifically, for a diagram in which the first development platform performs connection assistance, refer to FIG. 7. The user may trigger the process of connection assistance by double-clicking a source port with a left button of a mouse, as shown by ① in FIG. 7.

The first development platform collects port information of all ports in a current canvas.

The first development platform obtains, based on the obtained port information, as well as the port type, the type of data transmitted by the port, and the component category, all available ports as search space of the recommended port by using a decision tree algorithm, and calculates the port confidence based on a port feature used for confidence calculation and a weight value of the confidence.

In this example, a source port name is Channel_LDMpHydAct. Two port names in the search space are LDMpHydAct and v_veh_x. Types of port data are completely matched. A length of a diagonal on a modeling interface is 640.7 pixels. A distance from Channel_LDMpHydAct to LDMpHydAct is 70.8 pixels, and a distance from Channel_LDMpHydAct to v_veh_x is 65.1 pixels. Name matching degrees are 0.56 and 0. Both types of components are connection between computing components. A feature value is 0.8.

A confidence of connection between Channel_LDMpHydAct and LDMpHydAct is:

$$(640.7/70.8)*0.1+0.56*0.45+1*0.4+0.8*0.05=1.60$$

A confidence of connection between Channel_LDMpHydAct and v_veh_x is:

$$(640.7/65.1)*0.1+0*0.45+1*0.4+0.8*0.05=1.42$$

A port confidence calculation manner for other ports is similar.

The confidence calculation result of the first development platform shows the first five ports with the highest confidence and the names of the components in which the ports are located, as shown by (2) in FIG. 7. Based on the confidence calculation result in the previous step, the confidence of connection to LDMpHydAct is higher than that of v_veh_x. Therefore, LDMpHydAct is displayed on top of the result display list.

A connection effect preview module of the first development platform refreshes the interface, and displays and selects an effect diagram after the ports are connected, as shown by ③ in FIG. 7.

The user presses Enter to confirm the connection. The first development platform completes the connection.

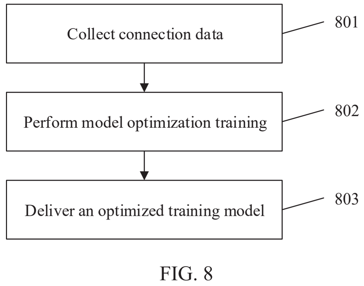

For a process in which a federated learning server trains a federated learning model in this embodiment of this application, refer to FIG. 8. Step 801: The federated learning server collects connection data, where the connection data is port information of an idle port and port information of a to-be-connected port determined by a user. Step 802: The federated learning server performs model optimization training based on the connection data and cloud machine learning by using a federated learning method. Step 803: The federated learning server delivers an optimized training model to the development platform to update the model.

In this embodiment of this application, when receiving a connection instruction for a first port, a first development platform determines a currently idle port as a second port, and obtains port information of the first port and port information of the second port for input into the federated learning model, where there is one or more second ports. The federated learning model may output a port confidence of port information of each second port relative to that of the first port, select n ports with highest port confidences for presentation to a user in a display list in a development interface, and present a connection line between a third port with a highest port confidence and the first port in the development interface. Because the port confidence is the correlation degree between the port information of the second port and the port information of the first port, accuracy of connection and connection efficiency can be improved by selecting the third port as a connection port.

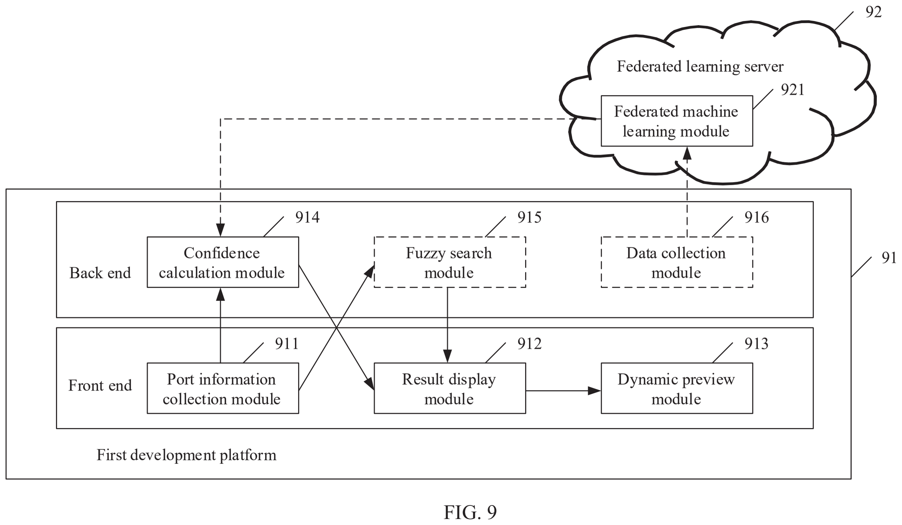

For a diagram of a structure of a connection assistance system according to an embodiment of this application, refer to FIG. 9. The system includes a first development platform 91 and a federated learning server 92. The first development platform 91 includes a port information collection module 911, a result display module 912, and a dynamic preview module 913 that are on a front end, as well as a confidence calculation module 914, a fuzzy search module 915, and a data collection module 916 that are on a back end. The federated learning server 92 includes a federated machine learning module 921.

When the user triggers an auxiliary connection line, first, the port collection module 911 on the front end collects port information of all connectable ports. The confidence calculation module 914 first determines search space of the available ports by using a decision tree algorithm, and then calculates port confidences based on feature information of the ports. The result display module 912 displays several recommendation results in descending order of the confidences. When the user switches a selected result among the recommendation results, the dynamic preview module 913 draws a connection preview effect in a modeling interface on the front end.

When the user uses a fuzzy search function, the fuzzy search module 915 matches a search result based on input data and displays the search result in the result display module 912. Similarly, the dynamic preview module 913 provides a connection preview effect of the searched port.

When the user establishes a connection line by using this solution or in another manner, the data collection module 916 collects features of connection ports, and establishes a local dataset. The cloud federated machine learning module 921 performs offline training. The confidence calculation module 914 may update a cloud-trained model, to optimize an inference effect.

For the foregoing port connection assistance method, an apparatus for executing the method may be described as follows.

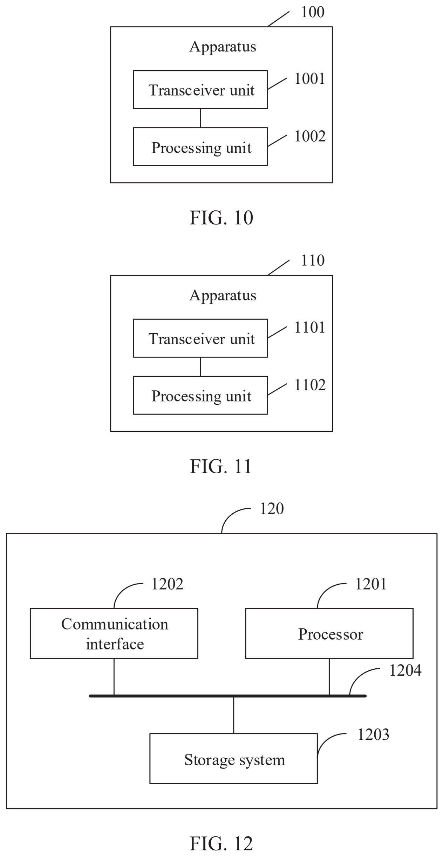

FIG. 10 is a diagram of a structure of a port connection assistance apparatus according to an embodiment of this application. The apparatus 100 includes:

a transceiver unit 1001, configured to receive a connection instruction, where the connection instruction indicates to perform connection to a first port; and

a processing unit 1002, configured to: obtain port information of the first port and port information of a second port based on the connection instruction, where the second port is one or more currently idle ports; input the port information of the first port and the port information of the second port into a federated learning model, to obtain a port confidence of the second port relative to the first port, where the port confidence is a correlation degree of port information; present a recommended port in a display list in a development interface, where the recommended port is n ports with highest port confidences in the second port, and n≥1; and present an auxiliary connection line in the development interface, where the auxiliary connection line is a connection line between the first port and a third port, and the third port is a port with a highest port confidence in the recommended port.

The processing unit 1001 is configured to perform step 201 in the method embodiment in FIG. 2, and the processing unit 1002 is configured to perform step 202 to step 205 in the method embodiment in FIG. 2.

Optionally, the transceiver unit 1001 is further configured to:
receive a switching instruction of a user, where the switching instruction indicates to switch to a fourth port, and the fourth port is a port in the display list.

The processing unit 1002 is further configured to:
change the auxiliary connection line to a connection line between the first port and the fourth port.

Optionally, the transceiver unit 1001 is further configured to:
receive a port name input by the user.

The processing unit 1002 is further configured to:
present a port related to the port name in the display list.

Optionally, the transceiver unit 1001 is further configured to:
receive a confirmation instruction of the user.

The processing unit 1002 is further configured to:
perform connection according to the auxiliary connection line based on the confirmation instruction.

Optionally, the port information includes a plurality of the following: a port name, a port type, a type of data transmitted by a port, a component type, a component category, a position of the port in an interface, and a name of a component in which the port is located.

Optionally, the processing unit 1002 is specifically configured to:

filter the second port based on the port type, the type of data, and the component category that are of the first port, to obtain a fifth port; and
input the port information of the first port and port information of the fifth port into the federated learning model.

Optionally, the federated learning model includes a weight of the port name, a weight of the component type, a weight of the position of the port in the interface, and a weight of the name of the component in which the port is located.

Optionally, the processing unit 1002 is further configured to:
obtain port information of a sixth port and port information of a first connection port, where the sixth port is one or more currently idle ports, and the first connection port is a to-be-connected port determined by the user.

The transceiver unit 1001 is further configured to:

send the port information of the sixth port and the port information of the first connection port to a federated learning server; and
receive a training model from the federated learning server, where the training model is obtained by the federated learning server through training based on the port information of the sixth port and the port information of the first connection port.

The processing unit 1002 is further configured to:
update the federated learning model based on the training model.

FIG. 11 is a diagram of a structure of a model training apparatus according to an embodiment of this application. The apparatus 110 includes:

a transceiver unit 1101, configured to receive port information of a sixth port and port information of a first connection port from a first development platform, where the sixth port is one or more currently idle ports, and the first connection port is a to-be-connected port determined by a user; and

a processing unit 1102, configured to perform training based on the port information of the sixth port and the port information of the first connection port, to obtain a training model.

The transceiver unit 1101 is further configured to send the training model to the first development platform.

Optionally, the transceiver unit 1101 is further configured to:
receive port information of a seventh port and port information of a second connection port from a second development platform, where the seventh port is one or more currently idle ports, and the second connection port is a to-be-connected port determined by the user.

The processing unit 1102 is further configured to:
perform training based on the port information of the seventh port and the port information of the second connection port, to adjust the training model.

FIG. 12 is a diagram of a possible logical structure of a computer device 120 according to an embodiment of this application. The computer device 120 includes a processor 1201, a communication interface 1202, a storage system 1203, and a bus 1204. The processor 1201, the communication interface 1202, and the storage system 1203 are connected to each other through the bus 1204. In this embodiment of this application, the processor 1201 is configured to control and manage an action of the computer device 120. For example, the processor 1201 is configured to perform the steps performed by the first development platform in the method embodiment in FIG. 2. The communication interface 1202 is configured to support the computer device 120 in performing communication. The storage system 1203 is configured to store program code and data of the computer device 120.

The processor 1201 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor 1201 may alternatively be a combination for implementing a computing function, for example, a combination including one or more microprocessors or a combination of a digital signal processor and a microprocessor. The bus 1204 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used for representation in FIG. 12, but this does not mean that there is only one bus or only one type of bus.

The transceiver unit 1001 in the apparatus 100 is equivalent to the communication interface 1202 in the computer device 120, and the processing unit 1002 in the apparatus 100 is equivalent to the processor 1201 in the computer device 120.

The computer device 120 in this embodiment may correspond to the first development platform in the method embodiment in FIG. 2. The communication interface 1202 in the computer device 120 may implement functions and/or steps implemented by the first development platform in the method embodiment in FIG. 2. For brevity, details are not described herein again.

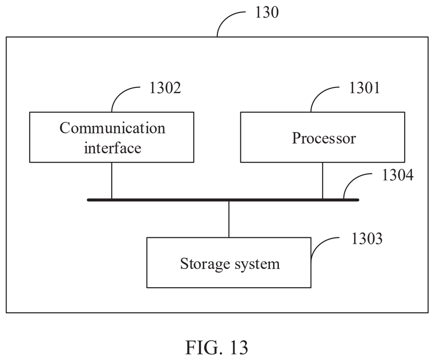

FIG. 13 is a diagram of another possible logical structure of a computer device 130 according to an embodiment of this application. The computer device 130 includes a processor 1301, a communication interface 1302, a storage system 1303, and a bus 1304. The processor 1301, the communication interface 1302, and the storage system 1303 are connected to each other through the bus 1304. In this embodiment of this application, the processor 1301 is configured to control and manage an action of the computer device 130. For example, the processor 1301 is configured to perform the steps performed by the federated learning server in the method embodiment in FIG. 2. The communication interface 1302 is configured to support the computer device 130 in performing communication. The storage system 1303 is configured to store program code and data of the computer device 130.

The processor 1301 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor 1301 may alternatively be a combination for implementing a computing function, for example, a combination including one or more microprocessors or a combination of a digital signal processor and a microprocessor. The bus 1304 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used for representation in FIG. 13, but this does not mean that there is only one bus or only one type of bus.

The transceiver unit 1101 in the apparatus 110 is equivalent to the communication interface 1302 in the computer device 130, and the processing unit 1102 in the apparatus 110 is equivalent to the processor 1301 in the computer device 130.

The computer device 130 in this embodiment may correspond to the federated learning server in the method embodiment in FIG. 2. The communication interface 1302 in the computer device 130 may implement functions and/or steps implemented by the federated learning server in the method embodiment in FIG. 2. For brevity, details are not described herein again.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

For example, a unit in any one of the foregoing apparatuses may be one or more integrated circuits configured to implement the foregoing method, for example, one or more application specific integrated circuits (application specific integrated circuit, ASIC), one or more microprocessors (digital signal processor, DSP), or one or more field programmable gate arrays (field programmable gate array, FPGA), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

In another embodiment of this application, a computer-readable storage medium is further provided. The computer-readable storage medium stores computer-executable instructions. When a processor of a device executes the computer-executable instructions, the device performs the method performed by the first development platform in the foregoing method embodiment.

In another embodiment of this application, a computer-readable storage medium is further provided. The computer-readable storage medium stores computer-executable instructions. When a processor of a device executes the computer-executable instructions, the device performs the method performed by the federated learning server in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the first development platform in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the federated learning server in the foregoing method embodiment.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, the division of units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

**Claims**

1. A port connection assistance method, comprising:

   receiving a connection instruction, wherein the connection instruction indicates to perform connection to a first port;
   obtaining port information of the first port and port information of a second port based on the connection instruction, wherein the second port is one or more currently idle ports;
   inputting the port information of the first port and the port information of the second port into a federated learning model, to obtain a port confidence of the second port relative to the first port, wherein the port confidence is a correlation degree of port information;
   presenting a recommended port in a display list in a development interface, wherein the recommended port is n ports with highest port confidences in the second port, and $n \geq 1$; and
   presenting an auxiliary connection line in the development interface, wherein the auxiliary connection line is a connection line between the first port and a third port, and the third port is a port with a highest port confidence in the recommended port.

2. The method according to claim 1, wherein after presenting the auxiliary connection line in the development interface, the method further comprises:

   receiving a switching instruction of a user, wherein the switching instruction indicates to switch to a fourth port, and the fourth port is a port in the display list; and
   changing the auxiliary connection line to a connection line between the first port and the fourth port.

3. The method according to claim 2, wherein before receiving the switching instruction of the user, the method further comprises:

   receiving a port name input by the user; and
   presenting a port related to the port name in the display list.

4. The method according to any one of claims 1 to 3, wherein after presenting the connection line between the first port and the port with the highest port confidence in the recommended port, the method further comprises:

   receiving a confirmation instruction of the user; and
   performing connection according to the auxiliary connection line based on the confirmation instruction.

5. The method according to any one of claims 1 to 4, wherein the port information comprises a plurality of the following: a port name, a port type, a type of data transmitted by a port, a component type, a component category, a position of the port in an interface, and a name of a component in which the port is located.

6. The method according to claim 5, wherein inputting the port information of the first port and the port information of the second port into the federated learning model comprises:

   filtering the second port based on the port type, the type of data, and the component category of the first port, to obtain a fifth port; and
   inputting the port information of the first port and port information of the fifth port into the federated learning model.

7. The method according to claim 6, wherein the federated learning model comprises a weight of the port name, a weight of the component type, a weight of the position of the port in the interface, and a weight of the name of the component in which the port is located.

8. The method according to any one of claims 1 to 7, wherein the method further comprises:

obtaining port information of a sixth port and port information of a first connection port, wherein the sixth port is one or more currently idle ports, and the first connection port is a to-be-connected port determined by the user;
sending the port information of the sixth port and the port information of the first connection port to a federated learning server;
receiving a training model from the federated learning server, wherein the training model is obtained by the federated learning server through training based on the port information of the sixth port and the port information of the first connection port; and
updating the federated learning model based on the training model.

9. A model training method, comprising:

receiving port information of a sixth port and port information of a first connection port from a first development platform, wherein the sixth port is one or more currently idle ports, and the first connection port is a to-be-connected port determined by a user;
performing training based on the port information of the sixth port and the port information of the first connection port, to obtain a training model; and
sending the training model to the first development platform.

10. The method according to claim 9, wherein the method further comprises:

receiving port information of a seventh port and port information of a second connection port from a second development platform, wherein the seventh port is one or more currently idle ports, and the second connection port is a to-be-connected port determined by the user; and
performing training based on the port information of the seventh port and the port information of the second connection port, to adjust the training model.

11. A port connection assistance apparatus, comprising:

a transceiver unit, configured to receive a connection instruction, wherein the connection instruction indicates to perform connection to a first port; and
a processing unit, configured to: obtain port information of the first port and port information of a second port based on the connection instruction, wherein the second port is one or more currently idle ports; input the port information of the first port and the port information of the second port into a federated learning model, to obtain a port confidence of the second port relative to the first port, wherein the port confidence is a correlation degree of port information; present a recommended port in a display list in a development interface, wherein the recommended port is n ports with highest port confidences in the second port, and $n \geq 1$; and present an auxiliary connection line in the development interface, wherein the auxiliary connection line is a connection line between the first port and a third port, and the third port is a port with a highest port confidence in the recommended port.

12. The apparatus according to claim 11, wherein the transceiver unit is further configured to:

receive a switching instruction of a user, wherein the switching instruction indicates to switch to a fourth port, and the fourth port is a port in the display list; and
the processing unit is further configured to:
change the auxiliary connection line to a connection line between the first port and the fourth port.

13. The apparatus according to claim 12, wherein the transceiver unit is further configured to:

receive a port name input by the user; and
the processing unit is further configured to:
present a port related to the port name in the display list.

14. The apparatus according to any one of claims 11 to 13, wherein the transceiver unit is further configured to:

receive a confirmation instruction of the user; and
the processing unit is further configured to:
perform connection according to the auxiliary connection line based on the confirmation instruction.

15. The apparatus according to any one of claims 11 to 14, wherein the port information comprises a plurality of the following: a port name, a port type, a type of data transmitted by a port, a component type, a component category, a position of the port in an interface, and a name of a component in which the port is located.

16. The apparatus according to claim 15, wherein the processing unit is specifically configured to:

filter the second port based on the port type, the type of data, and the component category of the first port, to obtain a fifth port; and
input the port information of the first port and port information of the fifth port into the federated learning model.

17. The apparatus according to claim 16, wherein the federated learning model comprises a weight of the port name, a weight of the component type, a weight of the position of the port in the interface, and a weight of the name of the component in which the port is located.

18. The apparatus according to any one of claims 11 to 17, wherein the processing unit is further configured to:

obtain port information of a sixth port and port information of a first connection port, wherein the sixth port is one or more currently idle ports, and the first connection port is a to-be-connected port determined by the user;
the transceiver unit is further configured to:

send the port information of the sixth port and the port information of the first connection port to a federated learning server; and
receive a training model from the federated learning server, wherein the training model is obtained by the federated learning server through training based on the port information of the sixth port and the port information of the first connection port; and
the processing unit is further configured to:
update the federated learning model based on the training model.

19. A model training apparatus, comprising:

a transceiver unit, configured to receive port information of a sixth port and port information of a first connection port from a first development platform, wherein the sixth port is one or more currently idle ports, and the first connection port is a to-be-connected port determined by a user; and
a processing unit, configured to perform training based on the port information of the sixth port and the port information of the first connection port, to obtain a training model; and
the transceiver unit, further configured to send the training model to the first development platform.

20. The apparatus according to claim 19, wherein the transceiver unit is further configured to:

receive port information of a seventh port and port information of a second connection port from a second development platform, wherein the seventh port is one or more currently idle ports, and the second connection port is a to-be-connected port determined by the user; and
the processing unit is further configured to:
perform training based on the port information of the seventh port and the port information of the second connection port, to adjust the training model.

21. A computer device, comprising a processor and a memory, wherein
the processor is configured to execute instructions stored in the memory, to enable the computer device to perform the method according to any one of claims 1 to 8.

22. A computer device, comprising a processor and a memory, wherein
the processor is configured to execute instructions stored in the memory, to enable the computer device to perform the method according to claim 9 or 10.

**23.** A computer-readable storage medium, wherein the computer-readable storage medium stores a computer program, and when the computer program is run on the computer, the computer is enabled to perform the method according to any one of claims 1 to 10.

**24.** A computer program product, wherein when the computer program product is executed on a computer, the computer performs the method according to any one of claims 1 to 10.

10

1011

A_1        A_3

A_2        A_4

Development interface

1012

B_1        B_3

B_2        B_4

101

Development platform

FIG. 1

A first development platform receives a connection instruction — 201

The first development platform obtains port information of a first port and port information of a second port based on the connection instruction — 202

The first development platform inputs the port information of the first port and the port information of the second port into a federated learning model, to obtain a port confidence of the second port relative to the first port — 203

The first development platform presents a recommended port in a display list in a development interface — 204

The first development platform presents an auxiliary connection line in the development interface — 205

FIG. 2

Distance between ports

Diagonal distance

Development interface

FIG. 3

FIG. 4

FIG. 5

Trigger connection recommendation — 601

Collect port information — 602

Calculate a port confidence — 603

Present a recommended port — 604 ⟷ Perform a fuzzy search — 605

Preview an auxiliary connection line — 606

Complete connection — 607

FIG. 6

FIG. 7

EP 4 697 224 A1

```
┌─────────────────────────────────┐
│      Collect connection data     │────── 801
└─────────────────────────────────┘
                 │
                 ▼
┌─────────────────────────────────┐
│  Perform model optimization      │────── 802
│            training              │
└─────────────────────────────────┘
                 │
                 ▼
┌─────────────────────────────────┐
│  Deliver an optimized training    │────── 803
│            model                 │
└─────────────────────────────────┘
```

FIG. 8

FIG. 9

100

Apparatus

Transceiver unit — 1001

Processing unit — 1002

FIG. 10

110

Apparatus

Transceiver unit — 1101

Processing unit — 1102

FIG. 11

120

1202

Communication interface

1201

Processor

1204

1203

Storage system

FIG. 12

FIG. 13

## INTERNATIONAL SEARCH REPORT

| International application No. |
| --- |
| **PCT/CN2023/140138** |

**A. CLASSIFICATION OF SUBJECT MATTER**

G06F30/15(2020.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, VEN, CNTXT, USTXT, CNKI, BAIDU: 端口, 连线, 辅助, 空闲, 联邦学习, 推荐, 置信度, 虚线, 相关, Port, wire, auxiliary, idle, federal, learn+, recommend+, confidence, dashed, correlate+,

**C. DOCUMENTS CONSIDERED TO BE RELEVANT**

| Category* | Citation of document, with indication, where appropriate, of the relevant passages | Relevant to claim No. |
| --- | --- | --- |
| Y | 随阳轶 等 (SUI, Yangyi et al.). "面向虚拟仪器的DFVPL:LabScene的自动连线 (Automatic Wiring of Virtual Instrument Oriented DFVPL:LabScene)" 吉林大学学报 (工学版) (Journal of Jilin University: Engineering and Technology Edition), Vol. 37, No. 5, 15 September 2007 (2007-09-15), pages 1023-1028 | 1-24 |
| Y | CN 107247827 A (STATE GRID JIANGSU ELECTRIC POWER COMPANY RESEARCH INSTITUTE et al.) 13 October 2017 (2017-10-13) description, paragraphs 23-45 | 1-24 |
| A | CN 115951973 A (KUNYI ELECTRONIC TECHNOLOGY (SHANGHAI) CO., LTD.) 11 April 2023 (2023-04-11) entire document | 1-24 |
| A | US 2020175362 A1 (SAMSUNG ELECTRONICS CO., LTD.) 04 June 2020 (2020-06-04) entire document | 1-24 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 February 2024** | **01 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/140138**

| Patent document cited in search report | | | Publication date (day/month/year) | Patent family member(s) | | | Publication date (day/month/year) |
|---|---|---|---|---|---|---|---|
| CN | 107247827 | A | 13 October 2017 | None | | | |
| CN | 115951973 | A | 11 April 2023 | None | | | |
| US | 2020175362 | A1 | 04 June 2020 | WO | 2020111647 | A1 | 04 June 2020 |
| | | | | EP | 3857469 | A1 | 04 August 2021 |

Form PCT/ISA/210 (patent family annex) (July 2022)

**EP 4 697 224 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310420252